Europäisches Patentamt
European Patent Office
Office européen des brevets

(19)

(11) Numéro de publication : **0 447 311 A1**


(12) **DEMANDE DE BREVET EUROPEEN**


(21) Numéro de dépôt : **91400664.8**

(51) Int. Cl.[5] : **G02B 26/02**, G01J 1/42

(22) Date de dépôt : **11.03.91**

(30) Priorité : **13.03.90 FR 9003181**

(43) Date de publication de la demande : **18.09.91 Bulletin 91/38**

(84) Etats contractants désignés : **CH DE FR GB LI**



(71) Demandeur : **COMMISSARIAT A L'ENERGIE ATOMIQUE**
**31-33, rue de la Fédération**
**F-75015 Paris (FR)**

(72) Inventeur : **Boulee, Pascal**
**3 Place de la Mairie, Bretenieres**
**F-21110 Genlis (FR)**

(74) Mandataire : **Mongrédien, André et al**
**c/o BREVATOME 25, rue de Ponthieu**
**F-75008 Paris (FR)**


(54) **Dispositif pour la caractérisation d'un faisceau lumineux.**


(57) Dispositif pour la caractérisation d'un faisceau lumineux comportant un système atténuateur dudit faisceau lumineux et un capteur (24). Le système atténuateur comporte une première lame à faces non parallèles, préférentiellement un prisme (16), présentant une face de renvoi (16a) pour réfléchir le faisceau lumineux,
au moins une deuxième lame à faces non parallèles, préférentiellement des prismes (18, 28) présentant une face de renvoi (18a, 28a) pour réfléchir le faisceau lumineux, ces lames (16, 18, 28) étant aptes à diriger ledit faisceau vers le capteur en l'atténuant d'un facteur d'atténuation réglable par variation de l'angle d'incidence dudit faisceau avec au moins une des lames.

Application à la caractérisation de faisceau laser de densité surfacique élevée.



EP 0 447 311 A1

Jouve, 18, rue Saint-Denis, 75001 PARIS

10
14
12b
16
16a
12
12a
iB
36
A
B
28
32
28a
18
18a
j
2j
24
24
34

FIG. 3 a

# DISPOSITIF POUR LA CARACTERISATION D'UN FAISCEAU LUMINEUX

La présente invention a pour objet un dispositif pour la caractérisation d'un faisceau lumineux. Elle s'applique notamment à la caractérisation de faisceaux de densité surfacique élevée issu d'un laser continu ou impulsionnel.

Diverses applications, par exemple la découpe ou le soudage effectués par laser, nécessitent une connaissance précise des caractéristiques (diamètre, divergence, répartition d'énergie, ...) du faisceau utilisé.

Plusieurs dispositifs sont connus pour caractériser un faisceau laser intense.

Un premier dispositif connu consiste en une aiguille que l'on déplace dans le faisceau. On mesure les variations d'énergie créées dans la partie du faisceau affectée par l'aiguille. Cette technique est inutilisable en régime impulsionnel car difficilement synchronisable avec ce type de laser.

Un autre dispositif connu consiste en des thermocouples placés sur le parcours du faisceau. Ce dispositif ne permet qu'une caractérisation du faisceau sur un nombre faible de points de mesure. Cette limitation est due au petit nombre de thermocouples qu'il est possible de disposer sur un capteur. De plus, l'électronique de traitement des signaux délivrés par les thermocouples est très complexe.

D'autres dispositifs font appel à une atténuation du faisceau pour adapter les puissances lumineuses mises en jeu aux puissances acceptables par des capteurs tels que des matrices ou des barrettes de détecteurs à transfert de charges (ce type de détecteur est noté CCD dans la suite du texte ; CCD correspond à la terminologie anglosaxonne usuelle "charge coupled device"). Dans ce cas, l'atténuation nécessaire peut être d'un facteur $10^6$.

Une technique connue recourt à l'utilisation d'une cellule de Pockels placée entre des polariseurs. Cette technique est coûteuse, et de plus, délicate à mettre en oeuvre.

De manière connue, on utilise aussi des verres absorbants. Mais la traversée de ces verres par le faisceau implique une qualité du matériau irréprochable pour ne pas altérer le faisceau à caractériser. De plus, les réglages de sensibilité obtenus par le remplacement d'un verre par un autre sont difficiles et fastidieux.

Un but de la présente invention est de permettre la caractérisation d'un faisceau lumineux de densité surfacique élevée grâce à l'adaptation de la puissance lumineuse à la puissance acceptable par le capteur, ceci sans altérer les caractéristiques initiales du faisceau quelle que soit la divergence de celui-ci.

Un autre but de la présente invention est de fournir un système atténuateur linéaire permettant, par un réglage optique simple, d'adapter la dynamique du laser à celle du capteur utilisé.

La présente invention concerne un dispositif pour la caractérisation d'un faisceau lumineux comportant un système atténuateur dudit faisceau lumineux et un capteur.

Le système atténuateur comporte :

une première lame de renvoi à faces non parallèles présentant une face de renvoi pour réfléchir le faisceau lumineux,

au moins une deuxième lame de renvoi à faces non parallèles présentant une face de renvoi pour réfléchir le faisceau lumineux,

ces lames étant aptes à diriger ledit faisceau vers le capteur en l'atténuant d'un facteur d'atténuation réglable par variation de l'angle d'incidence dudit faisceau avec au moins une des lames, les plans d'incidence des lames de renvoi étant confondus.

De manière préférée, les lames de renvoi à faces non parallèles sont des prismes.

L'utilisation d'un système de lames à faces non parallèles, préférentiellement des prismes, permet d'atténuer le faisceau lumineux par des réflexions successives en évitant donc toute traversée de matériau risquant de modifier les caractéristiques initiales du faisceau. Le coefficient de réflexion est fonction de l'angle d'incidence entre le faisceau et la normale à la face de renvoi des prismes. On peut donc régler le coefficient d'atténuation global en faisant simplement pivoter un ou plusieurs prismes, ce qui permet d'adapter la puissance lumineuse aux performances du capteur utilisé.

Selon un mode préféré, la face de renvoi de la première lame est positionnée à incidence de Brewster. Ceci est particulièrement avantageux lorsque le laser n'est pas polarisé. La réflexion à incidence de Brewster fixe la polarisation du faisceau à une polarisation perpendiculaire au plan d'incidence. Grâce à la connaissance des courbes théoriques donnant le coefficient de réflexion en fonction de l'incidence, cela permet de faciliter les réglages des lames suivantes.

Selon un mode de réalisation particulier, outre la première lame de renvoi, le système atténuateur comporte :

une deuxième lame de renvoi à faces non parallèles apte à pivoter autour d'un axe de manière à faire varier à volonté l'angle d'incidence du faisceau réfléchi par la première lame sur la face de renvoi de la deuxième lame,

une troisième lame de renvoi à faces non parallèles apte à pivoter autour d'un axe de manière à faire varier à volonté l'angle d'incidence du faisceau réfléchi par la deuxième lame sur la face de renvoi de la troisième lame.

De manière avantageuse, un couplage mécanique entre la deuxième lame, la troisième lame et le capteur permet de diriger automatiquement le faisceau vers le capteur quels que soient les angles d'incidence du faisceau sur les faces de renvoi des lames.

Avantageusement, une lame séparatrice permet de dévier une faible partie du faisceau pour la caractérisation, alors que l'autre partie est utilisée pour l'application envisagée (soudure, découpe, ...). De cette manière, on peut éventuellement contrôler les caractéristiques du faisceau sans dérégler son chemin optique.

De manière préférée, le capteur est une barrette de détecteurs à transfert de charges (CCD).

Dans ce cas, la barrette est positionnée perpendiculairement à ces plans. On peut ainsi déterminer la répartition d'énergie du faisceau sans perturbation due à la divergence de ce dernier.

D'autres caractéristiques et avantages de l'invention apparaîtront mieux après la description qui suit, donnée à titre explicatif et nullement limitatif. Cette description se réfère à des dessins annexés, sur lesquels :

- la figure 1 représente schématiquement un premier mode de réalisation d'un dispositif conforme à l'invention,
- les figures 2a et 2b représentent schématiquement les courbes théoriques donnant le coefficient de réflexion en fonction de l'incidence pour un matériau en BK7 et un faisceau de longueur d'onde 1064 nm polarisé respectivement parallèlement et perpendiculairement au plan d'incidence,
- les figures 3a et 3b représentent schématiquement un second mode de réalisation d'un dispositif conforme à l'invention.

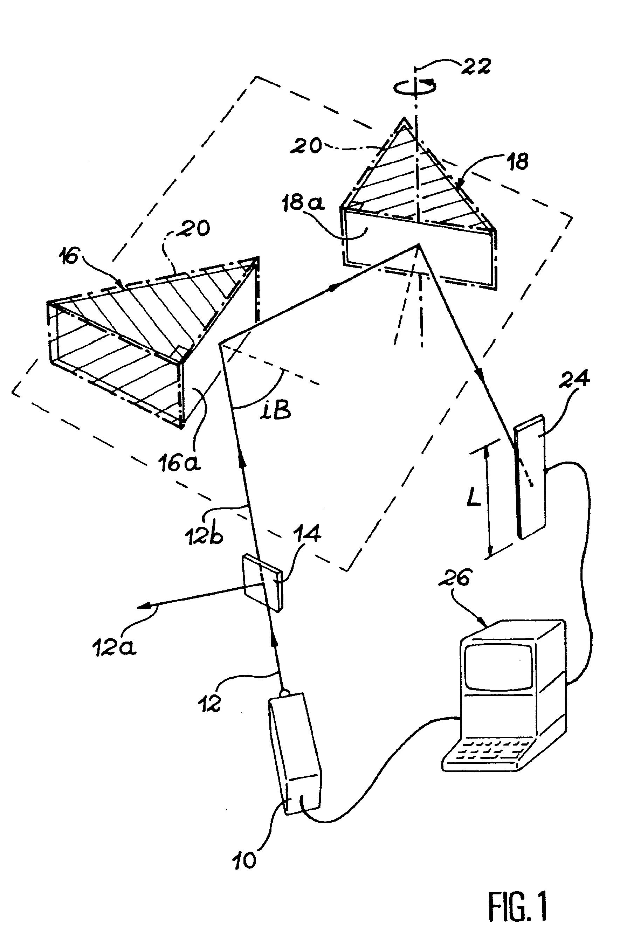

La figure 1 représente schématiquement un premier mode de réalisation d'un dispositif conforme à l'invention. Un laser 10 délivre un faisceau lumineux 12 à caractériser. Pour des applications de découpe ou de soudage, ce laser 10 peut être à $Nd^{3+}$-YAG émettant un faisceau continu ou impulsionnel de longueur d'onde 1064 nm.

Une lame séparatrice 14 sépare le faisceau 12 en deux parties 12a et 12b. Cette lame 14 peut être réalisée par le miroir de renvoi du système de soudage ou découpe. Un tel miroir réfléchit, par exemple 99,9 % du faisceau incident ; les 0,1 % transmis sont utilisés pour la caractérisation. Ils contribuent à l'atténuation totale.

La lame séparatrice doit être de qualité irréprochable pour que sa traversée n'altère pas les caractéristiques du faisceau.

Le faisceau 12b est réfléchi par un système de lames de renvoi à faces non parallèles. On élimine ainsi du parcours du faisceau 12b, tout faisceau parasite dû à des réflexions internes sur les faces des lames autres que les faces de renvoi.

Dans cet exemple de réalisation, ces lames à faces non parallèles sont constituées par des prismes 16, 18, par exemple en BK7 pour un fonctionnement à 1064 nm.

Les prismes de renvoi 16, 18 sont munis de capots 20 ne laissant à découvert que les faces de renvoi 16a, 18a. Ces capots 20, en matériau absorbant à la longueur d'onde utilisée, piègent les rayons parasites sortant des faces autres que les faces de renvoi 16a et 18a.

La face de renvoi 16a du premier prisme de renvoi 16 est positionnée à incidence de Brewster, c'est-à-dire que le faisceau incident 12b fait un angle d'incidence iB égal à l'angle de Brewster avec la normale à la face de renvoi 16a.

Pour le BK7, et pour la longueur d'onde de 1064 nm, l'angle de Brewster iB est égal à 56,43°.

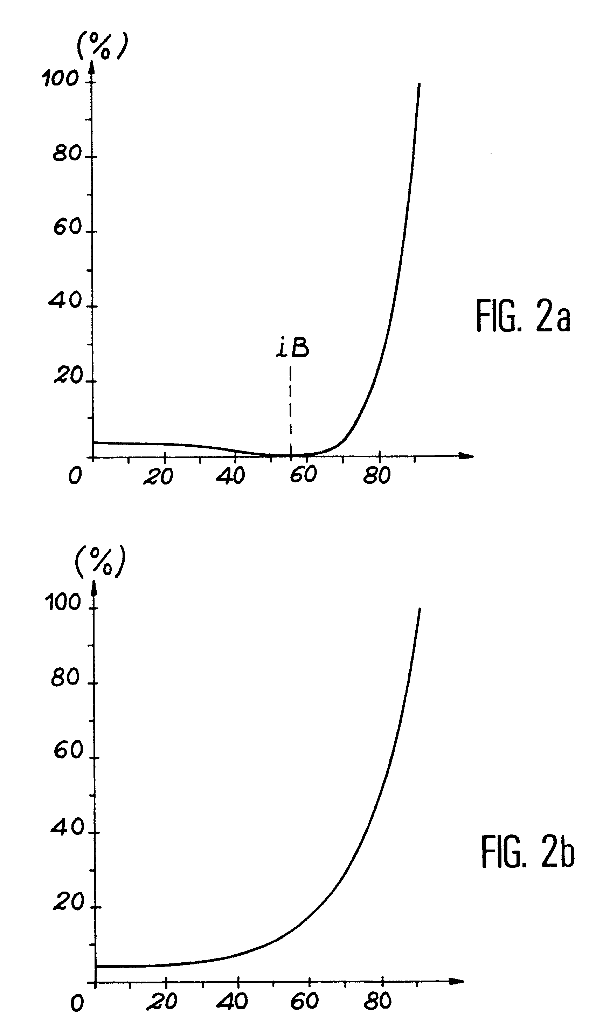

Les figures 2a et 2b représentent schématiquement les courbes théoriques donnant le coefficient de réflexion du BK7 en fonction de l'angle d'incidence pour un faisceau de longueur d'onde 1064 mm polarisé respectivement parallèlement et perpendiculairement au plan d'incidence, ceci pour une réflexion d'un milieu moins réfringent sur un milieu plus réfringent. On sait que tout faisceau lumineux non polarisé peut être décomposé en une composante de polarisation parallèle au plan d'incidence et en une composante de polarisation perpendiculaire au plan d'incidence.

Comme on peut le voir sur la figure 2a, la réflexion sous angle de Brewster iB élimine la composante polarisée parallèlement au plan d'incidence.

La figure 2b indique que sous incidence de Brewster, le BK7 réfléchit environ 15 % de la composante polarisée perpendiculairement au plan d'incidence.

On comprend donc que la réflexion sur le premier prisme 16 polarise le faisceau incident et l'atténue.

Un faisceau lumineux issu d'un laser présente une certaine divergence ; à cause de cette divergence, l'incidence sur la face de renvoi des lames n'est pas identique pour toute la circonférence du faisceau, ce qui engendre des différences dans les coefficients de réflexion affectés aux différentes parties du faisceau.

On constate qu'une différence d'incidence relativement faible engendre des écarts d'atténuation importants, ce qui fausse les mesures. Or, il s'avère que seuls les rayons du faisceau situés sur le diamètre perpendiculaire au plan d'incidence subissent la même atténuation car ils ont la même incidence sur la face de renvoi. Comme on va le voir, le dispositif selon l'invention tient compte de cette situation.

A nouveau, en référence à la figure 1, on voit que le second prisme 18 est positionné de manière à ce que son plan d'incidence (défini par la normale à la face de renvoi 18a et la direction du faisceau provenant du premier prisme 16) soit confondu avec le plan d'incidence du premier prisme. De cette manière, le faisceau incident sur la face de renvoi 18a présente une polarisation perpendiculaire au plan d'incidence du deuxième prisme 18. Ainsi, par rotation du second prisme 18 autour d'un axe 22 situé perpendiculairement au plan d'incidence du premier prisme 16, on peut atténuer le faisceau incident sur la face de renvoi 18a d'un facteur respectant la courbe théorique de la figure 2b.

De cette manière, le faisceau conserve une section présentant un diamètre ne présentant pas d'écart d'atténuation dû à la divergence.

Le faisceau atténué par les réflexions successives est dirigé vers une barrette 24 de détecteurs à transfert de charges (CCD). Une telle barrette 24 présente une longueur L, par exemple égale à 23 mm et est constituée de 1728 pixels correspondant à autant de points de mesure. La sensibilité d'une telle barrette est de 256 niveaux de gris, ce qui est généralement' inférieur à la dynamique en puissance du faisceau lumineux.

D'autre part, les détecteurs d'une telle barrette saturent pour une densité surfacique d'énergie égale à 0,11 microjoule/cm$^2$.

Le système atténuateur (lame séparatrice, prismes) permet d'adapter la densité d'énergie du faisceau (variant par exemple entre 0,3 et 90 J/cm$^2$) à la sensibilité de la barrette et d'éviter la saturation des détecteurs. La barette est positionnée selon le diamètre ne présentant pas d'écart d'atténuation dû à la divergence du faisceau.

La barrette 24 de CCD délivre sur une sortie un signal correspondant à la répartition d'énergie sur un diamètre du faisceau. Cette sortie est connectée à une entrée de moyens de traitement 26, par exemple un micro-ordinateur qui permet de donner une image de la répartition d'énergie à l'intérieur d'une section du faisceau incident.

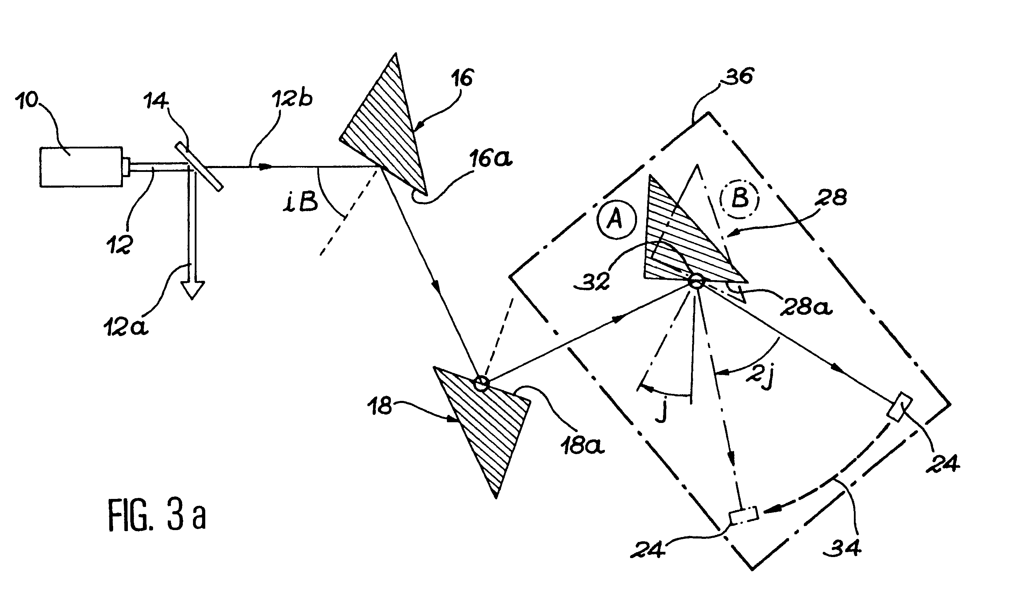

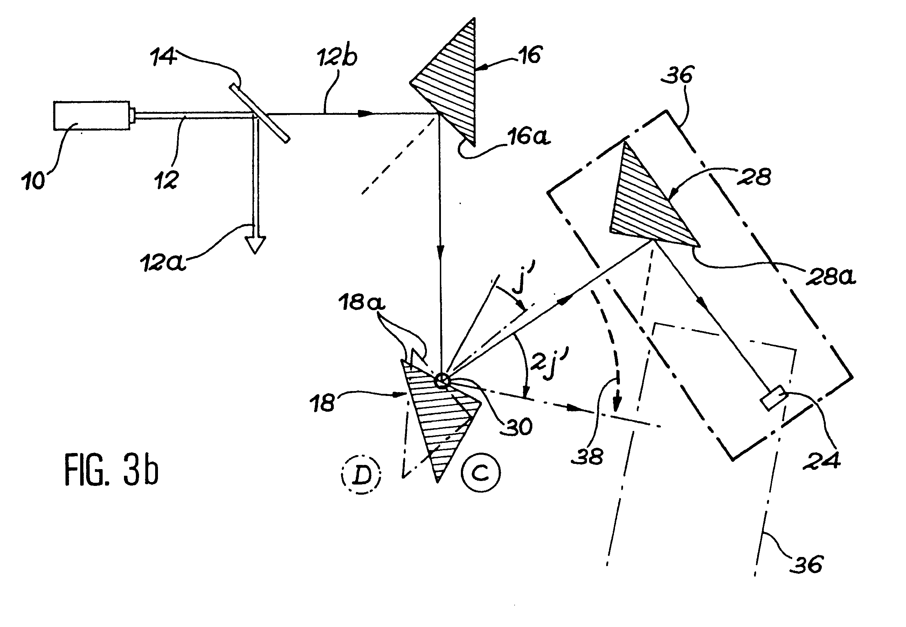

En référence aux figures 3a et 3b, on décrit maintenant un autre mode de réalisation d'un dispositif conforme à l'invention.

Dans cet exemple de réalisation, le faisceau incident 12b issu de la lame séparatrice 14 est atténué par trois réflexions successives sur des lames de renvoi à faces non parallèles constituées par les prismes référencés 16, 18 et 28, les plans d'incidence des prismes 16, 18, 28 sont confondus.

Le premier prisme 16 présente une face de renvoi 16a disposée à incidence de Breuster iB. A la suite de sa réflexion sur cette face, le faisceau est donc polarisé perpendiculairement au plan d'incidence et atténué (voir figures 2a et 2b).

Le faisceau incident se réfléchit ensuite sur les faces de renvoi 18a et 28a des prismes 18 et 28 pour être dirigé vers la barrette 24 des détecteurs CCD.

La barrette 24 est positionnée perpendiculairement aux plans d'incidence des prismes pour détecter le diamètre du faisceau ne présentant pas d'écart d'atténuation dû à la divergence.

Le facteur d'atténuation est réglable en faisant pivoter les deuxième et troisième prismes 18, 28 autour d'axes référencés respectivement 30 et 32. Ces axes sont perpendiculaires aux plans d'incidence des prismes 18 et 28.

Pour une configuration donnée du laser 10 et celui-ci réglé pour délivrer un faisceau d'énergie minimum (1 J par exemple avec un laser à $Nd^{3+}$-YAG), la face de renvoi 28a du troisième prisme 28 est positionnée à incidence maximum. Pour des raisons d'encombrements du faisceau sur cette face, l'angle d'incidence maximum peut être limité à 70° par exemple. Sur la figure 3a, le troisième prisme 28 représenté en trait plein est dans cette position A d'incidence maximum où la réflexion est la plus importante.

Lorsqu'on augmente l'énergie du faisceau lumineux (celle-ci peut aller jusqu'à 25 J par exemple avec un laser à $Nd^{3+}$-YAG), il suffit de faire pivoter le troisième prisme 28 d'un angle j autour de l'axe 32 pour diminuer la réflexion (figure 2b) et obtenir une atténuation du faisceau suffisante pour l'adapter aux performances du capteur 24.

Si l'on change la configuration du laser 10, (modification de la cavité optique ou taux de répétition pour un laser impulsionnel) la géométrie du faisceau est alors modifiée et pour une même énergie délivrée, la densité surfacique est différente.

On fait alors pivoter la face de renvoi 18a du deuxième prisme 18 autour de l'axe 30 pour obtenir la densité adaptée aux performances du capteur 24, le laser 10 étant réglé à son minimum d'énergie et le troisième prisme 28 étant positionné à l'incidence maximale. Si l'on augmente ensuite l'énergie lumineuse délivrée par le laser 10, il suffit d'effectuer le réglage du troisième prisme 28, comme indiqué plus haut.

Comme on peut le voir sur la figure 3a, pour passer de la position A en position B, le prisme 28 effectue une rotation autour de l'axe 32 d'un angle j. Le faisceau réfléchi par le prisme 28 subit quant à lui une déviation d'un angle double, égal donc à 2j. Pour intercepter le faisceau réfléchi par le troisième prisme 28, le capteur 24 est couplé mécaniquement au prisme 28 de manière à être entraîné en rotation autour de l'axe 32 d'un angle 2j. La flèche référencée 34 symbolise le couplage mécanique reliant le prisme 28 au capteur 24.

L'ensemble formé par le troisième prisme 28 couplé au capteur 24 est positionné sur un support 36.

Comme on peut le voir sur la figure 3b, pour passer de la position C en position D, le prisme 18 effectue une rotation autour de l'axe 30 d'un angle j'. Le faisceau réfléchi par le prisme 18 subit, de manière similaire, comme précédemment, une déviation d'un angle 2j'. Le support 36 est couplé mécaniquement (la flèche 38 symbolise ce couplage) au prisme 18 de manière à ce que le prisme 28 soit toujours sur le trajet du faisceau sans dérégler l'ensemble formé par ce prisme 28 et le capteur 24.

Le dispositif de l'invention permet donc bien de caractériser les faisceaux lumineux de densité surfacique élevée. Le système de prismes permet d'atténuer l'intensité du faisceau à caractériser de manière linéaire pour adapter sa densité énergétique aux performances du capteur utilisé.

Ce dispositif est adapté à la caractérisation de faisceau continu ou impulsionnel ; dans ce dernier cas, le micro-ordinateur de traitement est relié au laser (cf. fig.1) pour permettre une synchronisation de la détection.

L'invention ne se limite nullement aux exemples de réalisation plus spécialement décrits et représentés ; elle en admet au contraire toutes les variantes. En particulier, le capteur utilisé peut être une matrice de détecteurs CCD. Le traitement du signal est alors un peu plus compliqué puisque le signal délivré par chaque pixel doit être pondéré en fonction de sa position dans le faisceau pour compenser les écarts d'atténuation dûs à la divergence du faisceau.

**Revendications**

1. Dispositif pour la caractérisation d'un faisceau lumineux (12) comportant un système atténuateur dudit faisceau lumineux (12) et un capteur (24), caractérisé en ce que le système atténuateur comporte :
   une première lame de renvoi à faces non parallèles présentant une face de renvoi (16a) pour réfléchir le faisceau lumineux,
   au moins une deuxième lame de renvoi à faces non parallèles présentant une face de renvoi (18a, 28a) pour réfléchir le faisceau lumineux,
   ces lames étant aptes à diriger ledit faisceau vers le capteur (24) en l'atténuant d'un facteur d'atténuation réglable par variation de l'angle d'incidence dudit faisceau avec au moins une des lames, les plans d'incidence des lames de renvoi étant confondus.

2. Dispositif selon la revendication 1, caractérisé en ce que les lames de renvoi à faces non parallèles sont des prismes (16, 18, 28).

3. Dispositif selon la revendication 1, caractérisé en ce que la face de renvoi (16a) de la première lame de renvoi à faces non parallèles est positionnée à incidence de Brewster (iB).

4. Dispositif selon la revendication 1, caractérisé en ce que, outre la première lame de renvoi à faces non parallèles, le système atténuateur comporte :
   une deuxième lame de renvoi à faces non parallèles apte à pivoter autour d'un axe (30) de manière à faire varier à volonté l'angle d'incidence (j') du faisceau réfléchi par la première lame sur la face de renvoi (18a) de la deuxième lame,
   une troisième lame de renvoi à faces non parallèles apte à pivoter autour d'un axe (32) de manière à faire varier à volonté l'angle d'incidence (j) du faisceau réfléchi par la deuxième lame sur la face de renvoi (28a) de la troisième lame.

5. Dispositif selon la revendication 4, caractérisé en ce que la deuxième lame, la troisième lame et le capteur (24) sont couplés mécaniquement de manière à ce que le faisceau réfléchi par les lames soit dirigé vers le capteur quels que soient les angles d'incidence entre le faisceau et les faces de renvoi des lames.

6. Dispositif selon la revendication 1, caractérisé en ce que le système atténuateur comporte en outre une lame séparatrice (14).

7. Dispositif selon la revendication 1, caractérisé en ce que le capteur (24) est une barrette de détecteurs à transfert de charges.

8. Dispositif selon la revendication 7, caractérisé en ce que la barrette est positionnée perpendiculairement aux plans d'incidence des lames de renvoi.

22
20
18
18a
20
16
iB
16a
24
L
12b
14
26
12a
12
10

FIG. 1

(%)
100
80
60
40
20
0
20
40
60
80
iB

FIG. 2a

(%)
100
80
60
40
20
0
20
40
60
80

FIG. 2b

10
12
12a
12b
14
iB
16
16a
18
18a
28
28a
32
36
A
B
2j
j
24
24
34

FIG. 3a

10
12
12a
12b
14
16
16a
18
18a
24
28
28a
30
36
36
38
j'
2j'
C
D

FIG. 3b

Office européen des brevets

# RAPPORT DE RECHERCHE EUROPEENNE

Numero de la demande

EP 91 40 0664

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DD-A-256929 (VEB CARL ZEISS JENA)<br>* page 1, dernier alinéa - page 2; figure 1 * | 1, 4 | G02B26/02<br>G01J1/42 |
| A | | 5 | |
| A | APPLIED OPTICS.<br>vol. 26, no. 18, 15 septembre 1987, NEW YORK US<br>pages 3827 - 3830; J.Staromlynska et al.: "Variable optical attenuator for use in the visible spectrum"<br>* figure 4 * | 1, 2 | |
| A | US-A-4775220 (J.A.PENKETHMAN)<br>* colonne 3, lignes 52 - 58 * | 3 | |
| A | PATENT ABSTRACTS OF JAPAN<br>vol. 5, no. 52 (P-56)(724) 11 avril 1981,<br>& JP-A-56 7027 (FUJI SHASHIN FILM K.K.) 24 janvier 1981,<br>* le document en entier * | 7 | |

DOMAINES TECHNIQUES RECHERCHES (Int. Cl.5 )

G01J
G02B
H01S

Le présent rapport a été établi pour toutes les revendications

| Lieu de la recherche | Date d'achèvement de la recherche | Examinateur |
|---|---|---|
| BERLIN | 03 MAI 1991 | FUCHS R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)